# EUROPÄISCHE PATENTSCHRIFT

(11) **EP 1 211 297 B1**
(45) Veröffentlichungstag und Bekanntmachung des Hinweises auf die Patenterteilung: **18.02.2004**
(21) Anmeldenummer: 01127176.4
(22) Anmeldetag: 16.11.2001
(51) Int. Cl.: C09J 7/02, C09J 107/02

(54) **Klebeband für Verpackungszwecke**
Adhesive tape for wrapping purposes
Bande adhésive pour emballage

(30) Priorität: 01.12.2000 DE 10059875
(43) Veröffentlichungstag der Anmeldung: 05.06.2002
(73) Patentinhaber: Tesa AG, 20253 Hamburg (DE)
(72) Erfinder: Wenninger, Dieter, Dr., 22765 Hamburg (DE); Galle, André, 22767 Hamburg (DE); Monschein, Thomas, 77770 Durbach (DE)

(56) Entgegenhaltungen:
- EP-A- 0 688 843
- EP-A- 0 960 923
- WO-A-94/24221

## Beschreibung

Die Erfindung bezieht sich auf ein Klebeband mit einem Träger auf Basis von Polyolefinen, der einseitig mit einer lösemittelfreien Klebemasse auf Basis von Naturkautschuklatex beschichtet ist, sowie die Verwendung des Klebebands als Verpackungsklebeband.

Klebebänder mit Folien auf Basis von Polyolefinen, wie beispielsweise biaxial gerecktem Polypropylen, und Klebemassen auf Basis von lösemittelhaltigem Naturkautschuk oder wäßrigen Acrylatdispersionen sind bekannt und werden von bekannten Herstellern angeboten.

Eine Beschreibung befindet sich beispielsweise in "Packaging Tapes", Stefan Röber in Handbook of Pressure Sensitive Adhesive Technology, Third Edition, edited by Donatas Satas, Satas&Associates, Warwick, Rhode Island pp. 787-814. Weitere Beschreibungen befinden sich in "European Adhesives & Sealants 10(4), 1993, 29 von G. Pedala" und "European Adhesives & Sealants 2(2), 1985, 18 von R.W. Andrew".

Auf Grund der bekannten Nachteile bei der Herstellung von lösemittelhaltigen Klebebändem, wie zum Beispiel das aufwendige Recycling von Lösungsmitteln, die Emission von Lösungsmittel in die Umwelt, die Gefährdung am Arbeitsplatz durch leicht entflammbare Lösungsmittel und die Beschränkung der Beschichtungsgeschwindigkeit durch Trocknung der Klebemasse, sind lösemittelfreie Technologien zur Herstellung von Klebebändem von fortschreitender Bedeutung.

Nachteilig ist neben der bereits beschriebenen Problematik der Lösemitteltechnologie der erforderliche Abbau des Naturkautschuks bei der Herstellung der Klebemasse, die Mastikation. Hieraus resultiert eine deutlich nachlassende Kohäsivität der Klebemasse je nach Stärke des Abbau durch mechanische Belastung.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als "chemische Plastiziermittel" bekannt sind.
Der Mastikationsschritt ist in der Kautschuktechnologie nötig, um eine Erleichterung der Aufnahme der Zusatzstoffe zu erzielen.

Nach Römpp (Römpp Lexikon Chemie - Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetern oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem "Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).

Die Degradation ist eine Kollektivbezeichnung für unterschiedliche Prozesse, die das Aussehen und die Eigenschaften von Kunststoffen verändern. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vemetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Die Verwendung derartiger Klebemassen auf Basis von Naturkautschuk-Schmelzhaftklebem für Klebebänder, insbesondere Verpackungsklebebänder, zum Verschließen von Kartons aus recyceltem Papier oder Kartonagen, führt dazu, daß sich die Kartons frühzeitig öffnen. Bei ausreichender großer Deckelspannung des Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich durch Abrutschen des Verpackungsklebebandes.

Die Kohäsion und damit die Verpackungssicherheit von Klebebändern mit einer Klebemasse auf Basis von Naturkautschuk kann entweder durch Vemetzung der Kautschuk-Klebemasse und/oder durch eine Herstellungsvariante der Klebemasse, bei der der eingesetzte Naturkautschuk deutlich weniger stark abgebaut wird und somit ein höheres Molekulargewicht aufweist, verbessert werden. Hierdurch kann einem Abrutschen der Klebebänder auf der Kartonoberfläche, wie oben beschrieben, entgegengewirkt werden.

Lösemittelfreie Technologien zur Herstellung von Klebebändern, insbesondere Verpackungsklebebändern, ist bisher auf die Verwendung von Klebemasse auf Basis von Acrylatdispersionen sowie auf die Verwendung von schmelzenden, thermoplastischen Elastomeren beschränkt.
Vorteil dieser thermoplastischen Elastomeren, vorwiegend Blockcopolymere mit Polystyrolblöcken, ist der relativ niedrige Erweichungspunkt und die damit verbundene Vereinfachung des Auftrags- beziehungsweise Streichprozesses sowie die Vermeidung der oben beschriebenen Nachteile der lösemittel-basierenden Technologien.

Das ungünstige Alterungsverhalten und das Eigenschaftsprofil derartiger Verpackungsbänder bei erhöhten Temperaturen, die schlechte Wärmestandfestigkeit, führen zu einem frühzeitigen Öffnen der mit diesen Verpackungsbändem verpackten Kartons beziehungsweise zu einem allgemein teilweise ungünstigen Leistungsprofil für Verpackungsklebebänder. Weiterhin sind die zum Teil sehr hohen Prozeßtemperaturen nachteilig für bestimmte Klebemassenzusammensetzungen.

Weitere lösemittelfreie Systeme auf Basis wäßriger Klebestoffe, wie beispielsweise Klebesysteme auf Basis von Polyvinylacetat, Polyvinylacetat-Ethylen-Copolymere, Neopren, Styrol-Butadien, Polyurethan, Polyvinylalkohol, finden aufgrund einer für Klebebänder, insbesondere Verpackungsklebebänder, ungünstigen Kosten und/oder Leistungsstruktur keine oder nur geringfügige Anwendung.
Eine Übersicht über die wichtigsten wäßrigen Klebstoffsysteme sowie ihre Verwendung findet sich in "Solvent free adhesives", T.E. Rolando (H. B. Fuller) in Rapra Rev. Rep. 1997, 9(5), 3-30 Rapra Technology Ltd.

Verschiedene Wege- zur lösungsmittelfreien Herstellung und Verarbeitung von Kautschuk-Haftklebem sind bekannt.
Eine Übersicht über solche Klebemassen und deren Einsatz im Bereich der Pressure Sensitive Adhesives findet sich in "Natural Rubber Adhesives" (G. L. Butler in Handbook of Pressure Sensitive Adhesive Technology, Third Edition, edited by Donata Satas, Van Nostrand Reinhold New York, pp.261-287).

Alle bekannten Verfahren zeichnen sich durch extrem starken Kautschukabbau aus. Dieser erfordert bei der Weiterverarbeitung der Massen zu Selbstklebebändern extreme Vemetzungsbedingungen und hat außerdem ein teilweise eingeschränktes Anwendungsprofil, insbesondere für den Einsatz resultierender Selbstklebebänder bei höheren Temperaturen, zur Folge.

Lösemittelfreie Schmelzhaftkleber auf Basis von nicht-thermoplastischen Elastomeren, wie zum Beispiel Naturkautschuk oder anderer hochmolekularer Kautschuke, weisen ohne Vemetzungsschritt der Klebemasse eine für die meisten Anwendungen ungenügende Kohäsion auf und kommen somit nicht für den Einsatz im Rahmen eines Verpackungsklebebandes in Frage. Ursache für dieses Versagen von unvernetzten Klebemassen auf Basis Naturkautschuk ist die relativ starke Reduzierung des Molekulargewichts durch die Verarbeitung beziehungsweise durch den Herstellungsprozess der Klebemassen auf Basis von Naturkautschuk und die hierbei resultierende, verminderte beziehungsweise ungenügende Kohäsion der Klebemassen.

In CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vemetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da sich weder hohe Scherfestigkeiten beim Einsatz der Selbstklebebänder bei höheren Temperaturen, noch deutliche Verbesserungen gegenüber den in CA 698 518 beschriebenen Eigenschaften ergeben.

Roh-Naturkautschuklatex wird von den Plantagen geliefert und mittels entsprechender Methoden gereinigt, konserviert und aufkonzentriert. Allgemein beschrieben werden die Latextypen und Methoden der Verarbeitung in "Naturkautschuk - Technisches Informationsblatt", Malaysian Rubber Producers Research Association, L1, 1977 und in "Kautschuktechnologie", Wemer Hofmann, Gentner Verlag Stuttgart S. 51ff.

Naturkautschuklatex wird als Naturprodukt von sogenannten Latexbäumen geemtet. Nach diversen Aufbereitungsschritten zur Auftrennung und Reinigung werden vier Grundtypen von Naturkautschuklatices unterschieden:
1. Standard Naturkautschuklatex mit einem hohen Ammoniakgehalt von 0,7 Gew.-%
2. Naturkautschuklatex mit niedrigem Ammoniakgehalt von 0,2 Gew.-% in Kombination mit Zinkoxid und Tetramethyl-thiuram-dissulphid < 0,035 Gew.-%
3. Naturkautschuklatex doppelt zentrifugiert mit besonders hoher Reinheit
4. Naturkautschuklatex teilweise vulkanisiert für speziellen Anwendungen

Eine Mastikation und der damit verbundene Abbau des Naturkautschuks ist bei der Herstellung von Klebemassen auf Basis von Naturkautschuklatex nicht notwendig, da im Falle der lösemittelfreien, wäßrigen Klebemasse durch einfaches Vermischen der Komponenten eine Mastikation und damit ein Molekülabbau durch mechanische Belastung nicht stattfindet. Hieraus resultiert eine enge Verschlaufung der Naturkautschuk-Latex/Isoprenmoleküle, ein hohes Molekulargewicht bedingt durch fehlende Mastikation, eine breite Molekulargewichtsverteilung und ein niedriger Erweichungspunkt T_{g}.
Diese Faktoren bedingen eine sehr gute Balance zwischen Kohäsion und Adhäsion der aus Harzabmischungen resultierenden Klebemasse, und weiterhin ein für Klebebänder äußerst leistungsstarkes Eigenschaftsprofil über einen sehr breiten Temperaturbereich.

Dieses positive Verhalten über einen breiten Temperaturbereich wird ausgenutzt bei dem in JP 56 030 481 beschriebenen Klebeband mit einer Klebemasse auf Basis von Naturkautschuklatex. Durch Verwendung des Naturkautschuklatex wird ein stoßunempfindliches Verhalten bei niedrigen Temperaturen beschrieben.

Ein weiterer Punkt ist, daß Naturkautschuklatex sich durch ein besonders breites Spektrum an Anwendungen auszeichnet. So ist Naturkautschuklatex einerseits für den Einsatz als Klebemasse für Verpackungsmaterialien geeignet und zum anderen für Anwendungen außerhalb der Klebetechnologie.

Nachteilig an Klebemassensystemen auf Basis von Naturkautschuklatex ist die mangelnde Stabilität des Rohstoffes Naturkautschuklatex gegenüber mechanischer Belastung und der damit verbundenen Koagulation des Naturkautschuklatex in der Klebemasse. Diese Scherempfindlichkeit bedingt die eingeschränkte Handhabbarkeit und Einsetzbarkeit des Naturkautschuklatex für die Klebemassentechnologie und Klebebandindustrie. Die Herstellung von Klebebändern, bei der die Naturkautschuklatex enthaltende Klebemasse mit hoher Geschwindigkeit auf eine Folie beschichtet werden kann, ist nicht bekannt.

Durch den Einsatz von stabilisierenden Harzdispersionen und/oder oberflächenaktiven Substanzen, wie zum Beispiel Emulgatoren, kann die Stabilität des Naturkautschuklatex deutlich gesteigert werden. Mit der Steigerung der Stabilität des Naturkautschuklatex durch oberflächenaktive Stoffe in hohen Konzentrationen ist aber gleichzeitig ein drastischer Verlust der Kohäsion der Klebemasse gekoppelt, so daß derartig modifizierte Klebemassen nicht für Verpackungsklebebänder eingesetzt werden können.

Die allgemeine Verwendung von Naturkautschuklatex für Klebemassen sowie den Latex stabilisierende Harzdispersionen ist beschrieben in "Tackified waterbome adhesive for PSA tapes", J. G. de Hullu, European Adhesive & Sealants, 12 (1998), pp 11-12. Durch den Einsatz derartiger den Naturkautschuklatex stabilisierender Harzdispersionen wird eine Verarbeitung beziehungsweise Beschichtung von Klebemassen auf Basis von Naturkautschuklatex ermöglicht. Durch das störungsfreie Aufbringen der Dispersionsklebemassen auf einen polymeren Träger ist eine technisch machbare und ökonomisch sinnvolle Klebeband-Produktion möglich. Durch den Einsatz einer geeigneten Zusammensetzung der Klebemasse und technischer Einstellung und Optimierung der Beschichtungsanlagen ist ein Einsatz dieser Technologie ermöglicht.

Die Anwendung und die Entwicklung eines Klebebandes, welches leise abrollt und für Verpackungsanwendungen geeignet ist, ist hierbei nicht beschrieben. Die Verwendung von leise abrollenden Klebebändern, insbesondere zum Kartonverschluß ist jedoch von großer Bedeutung innerhalb der Verpackungsindustrie, um die Lärmbelastung in den Verpackungshallen zu erniedrigen und somit die Arbeitsleistung zu erhöhen. Die Fähigkeit des leisen Abrollens ist von fundamentaler Bedeutung, um ein Verpackungsklebeband im mittleren bis oberen Preis- Leistungssegment einzuordnen.

Harzdispersionen auf Basis von Kolophoniumharzen beziehungsweise von Kolophoniumharzderivaten werden für eine Vielzahl von wassergetragenen Polymeren eingesetzt. Hierbei finden vor allem Kolophoniumester (Rosin ester) Verwendung. Im allgemeinen werden die Adhäsionseigenschaften auf Oberflächen gesteigert. Hierbei kann der Harzerweichungspunkts des entsprechenden Kolophoniumharzes beziehungsweise des Derivats entsprechend ausgesucht werden. Diese Harzdispersionen dienen im Klebebandbereich als Tackifier für die jeweiligen Klebemassen um die Adhäsionseigenschaften auf verschiedenen Oberflächen zu optimieren und werden somit in Kombination mit entsprechenden Kohlenwasserstoffharzdispersionen (Hauptharzkomponente) eingesetzt.

Allgemein ist Naturkautschuklatex als Komponente für Klebemassen bekannt und unter anderem in Patenten beschrieben. Die Einsatzgebiete derartiger Klebemassen auf Basis von Naturkautschuklatex sind Anwendungen im Bereich der Etiketten und Pflastertechnologie.

Die Herstellung von wäßrigen Klebemassen auf Basis von Naturkautschuklatex ist bekannt. Diese Klebemassen werden wie oben beschrieben zur Herstellung von selbstklebenden Etiketten verwendet. Hierbei werden die üblichen Methoden zur Herstellung von Dispersionsklebestoffen verwendet.

Ebenfalls ist die Herstellung von Klebemassensystemen, welche Naturkautschuklatex enthalten, in EP 0 960 923 A1 beschrieben. Hierbei wird zum einen die Herstellung von Dispersionsklebemassen offenbart als auch die Einbringung von Naturkautschuklatex in andere Naturkautschukklebesysteme mittels Kneter, Mischer oder Extruder. Diese derart hergestellten Klebemassen können auf Folie oder Vlies beschichtet werden.
Eine Verbesserung der Verpackungseigenschaften derartiger Klebebänder mittels einer kontrollierten, nachhaltigen Vemetzung der Klebemasse, die zudem im Rahmen eines sinnvollen Produktionsprozesses eingesetzt werden kann, ist nicht beschrieben.

Bei Verwendung von Klebemassenvariationen auf Basis von Naturkautschuklatex ist - wie bereits oben ausgeführt - eine nachhaltige Vemetzung nicht notwendig, um ein gutes den meisten anderen Klebemassensystemen überlegenes Verpackungsverhalten zu erzielen.
Durch den Einsatz der zuvor beschriebenen stabilisierenden Harzdispersionen sowie durch Verwendung von Naturkautschuklatex und somit des Fehlens jeglichen mechanischen Kautschukabbaus ist eine Herstellung, Verarbeitung und Beschichtung von Klebemassen auf Basis von Naturkautschuklatex möglich und damit die Herstellung von Klebebändern, weil die Klebemasse eine sehr hohe Kohäsion und damit optimale Verpackungssicherheit aufweist.

Nicht nur für Verpackungsklebebänder zum Kartonverschluß, sondern auch für andere Verpackungsklebebänder, wie Strapping-Tapes, ist daher eine ausreichende Kohäsion der Klebemasse auf Basis von Naturkautschuk notwendig.

Die Klebebänder sind im Falle der Naturkautschukklebemassen mit einer Rückseitenlackierung versehen, um die Abrollkraft zu reduzieren. Diese Rückseitenlackierung ist notwendig, um eine Überdehnung des Trägers während der Applikation zu verhindern. Ohne die Reduzierung der Abrollkraft mittels Rückseitenlackierung wird der Träger bei schnellem Abrollen durch zu hohe Abrollkräfte überdehnt, wodurch eine deutlich verschlechterte Verpackungssicherheit resultiert. Weiterhin zeigen derartige rückseitenlackierte Klebebänder eine lautes und knatterndes Abrollverhalten. Auf Grund dieses Abrollverhaltens eignen sich derartige Klebebänder nur für den Verkauf und Einsatz im unteren Preis- und Leistungsverhältnisses.

Im Falle der Klebebänder mit einem Träger auf Basis von Polyolefinen, vorzugsweise Polypropylen, in Kombination mit einer Klebemasse auf Basis von Acrylatdispersionen wird ein leises und knatterfreies Abrollverhalten der Klebebänder durch eine Oberflächenbehandlung der der Klebemasse abgewandten Trägerseite erreicht. Hierfür wird im Regelfall die Coronabehandlung eingesetzt. Dies wird in der EP 0 096 841 beschrieben. Durch diese Coronabehandlung der Trägerrückseite, zum Beispiel nach der Beschichtung während des Schneidprozesses, wird die Abrollkraft der Klebebänder erhöht und somit ein Abplatzen der Klebemasse vom Träger verhindert. Dieses Abplatzen der Klebemasse vom Träger auf Grund des Abrollvorganges führt zu einem lauten, knatternden Abrollverhalten. Mittels der Coronabehandlung der Rückseite in geeignetem Maße wird das Klebeband leise abrollend. Hierbei wird durch geeignete Coronabehandlung der Rückseite die Abrollkraft eingestellt und somit auch das Abrollverhalten eingestellt. Bis zum heutigen Entwicklungsstand sind alle Klebebänder ohne Rückseitencoronabehandlung laut abrollend.

Die Coronabehandlung der Klebebänder bringt im wesentlichen Nachteile mit sich. Zum ersten ist ein zusätzlicher Arbeitsschritt verbunden, der eine zusätzliche maschinelle Ausrüstung verlangt. Im Falle der Coronabehandlung beim Schneidprozeß können nur Schneidmaschinen mit einer Schneidcorona verwendet werden. Dies erfordert teilweise zusätzliche maschinelle Anschaffungen. Zum zweiten ist die genaue Stärke der Coronabehandlung entscheidend, um den gewünschten Effekt zu erzielen. Dies bringt eine große Prozeßunsicherheit mit sich, die zu verstärkter Qualitätskontrolle verpflichtet.
Im Falle einer zu geringen Coronaleistung wird der gewünschte Effekt des leisen Abrollens nur unzureichend erfüllt, da die resultierenden fertigen Klebebänder nicht nachbehandelt werden können, ist die Produktion von Ausschuß die Folge. Im Falle einer zu starken Coronaleistung wird die Abrollkraft zu stark erhöht, wodurch es zu einer Trägerüberdehnung, einem Trägerabriß oder zu einem Übergang der Klebemasse während des Abrollens des Klebebandes kommt.

Monoaxial und biaxial gereckte Folien auf Basis von Polypropylen werden in großen Mengen für Verpackungsklebebänder eingesetzt. Während für die Anwendung eines Verpackungsklebebandes für den Kartonverschluß biaxial gereckte Folien auf Basis Polypropylen bevorzugt werden, finden im Bereich der Strapping-Tapes monoaxial gereckte Polypropylenfolien Verwendung. Diese zeichnen sich durch sehr hohe Reißfestigkeit und geringe Dehnung in Längsrichtung aus und sind sehr gut für das Bündeln beziehungsweise für den Zusammenhalt von Paletten geeignet. Bei Verwendung von Klebemassen, die eine ungenügende Kohäsion aufweisen oder eine unzureichende Verankerung der Klebemasse auf der Folie, führt das Abrutschen der Strapping-Tapes zu einem Verrutschen der Paletten und somit zu einer ungenügenden Sicherung der Paletten. Eine unzureichende Verankerung der Klebemasse auf der Folie führt bei Verwendung von Kartonverschlußbändern zu einem frühzeitigen Öffnen der verpackten Kartons.

Thermoplastfolien auf Basis von Polyvinylchlorid (PVC) werden zur Herstellung von Klebebändem von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus. Weiterhin besitzen Folien auf Basis von Polyestern eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Bei der Herstellung von Klebebändern mit Klebemassen auf Basis von Naturkautschuk werden hierbei sowohl wasserbasierte als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vernetzende Wirkung.

Aufgabe der vorliegenden Erfindung ist es, Klebebänder mit Folien auf Basis von gereckten Polyolefinen und lösemittefrei hergestellten Klebemassen auf Basis von Naturkautschuklatex zu schaffen, welche auch bei sehr hohen Abrollgeschwindigkeiten ein leises Abrollverhalten zeigen, ohne daß die der Klebemasse entgegengesetzte Trägerseite des Klebebandes mittels Coronabehandlung aktiviert werden muß. Dieses leise Abrollverhalten soll ebenfalls bei sehr hohen Abrollgeschwindigkeiten beibehalten werden.
Weiterhin sollen die Klebebänder leicht abrollen. Darüber hinaus sollen die neuen Klebebänder als Verpackungsklebebänder für handelsübliche Kartonagen hervorragend geeignet sein.

Gelöst wird diese Aufgabe durch ein Klebeband, wie es im Hauptanspruch dargelegt ist. Gegenstand der Unteransprüche sind vorteilhafte Fortbildungen des Erfindungsgegenstands. Des weiteren betrifft die Erfindung Verwendungsvorschläge des erfindungsgemäßen Klebebands.

Demgemäß betrifft die Erfindung ein einseitig selbstklebend ausgerüstetes Klebeband, mit einer Folie auf Basis gereckter Polyolefine, wobei die der Klebeschicht abgewandte Folienseite keine Oberflächenbehandlung aufweist.
Die Folie ist einseitig mit einer Klebeschicht versehen, hergestellt aus einer Mischung enthaltend

| | |
|---|---|
| 35 bis 70 Gew.-% | ein Naturkautschuklatex |
| 20 bis 65 Gew.-% | eine Harzdispersion auf Basis eines Kohlenwasserstoffharzes, |
| 0,5 bis 20 Gew.-% | eine Harzdispersion auf Basis eines Kolophoniumharzes beziehungsweise eines Derivats eines Kolophoniumharzes. |

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol bzw. durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm3.

Sie sind löslich in organischen Lösungsmitteln wie Ethem, Estern, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethem und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90% Harzsäuren und 10% Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, Isopimar-, und Palustrinsäure, neben hydrierter und dehydrierter Abietinsäure.

Die Mengenverhältnisse dieser Säuren variieren in Abhängigkeit von der Provenienz des Kolophoniums.

Erfindungsgemäß als Folien einsetzen lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten.

Monoaxial gerecktes Polypropylen zeichnet sich durch seine sehr hohe Reißfestigkeit und geringe Dehnung in Längsrichtung aus und wird beispielsweise zur Herstellung von Strapping-Tapes verwendet. Besonders bevorzugt zur Herstellung der erfindungsgemäßen Klebebänder, insbesondere zum Bündeln und Palettieren von Kartonagen und anderen Gütern, sind monoaxial gereckte Folien auf Basis von Polypropylen.

Die Dicken der monoaxial gereckten Folien auf Basis von Polypropylen liegen bevorzugt zwischen 25 und 200 µm, insbesondere zwischen 40 und 130 µm.

Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Weiterhin besonders bevorzugt zur Herstellung der erfindungsgemäßen Klebebänder, die u.a. zum sicheren Kartonverschluß dienen, sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Die erzielten Elastizitätsmodule in Längsrichtung, gemessen bei 10% Dehnung nach ASTM D882, liegen üblicherweise zwischen 1000 und 4000 N/mm², vorzugsweise zwischen 1500 und 3000 N/ mm².

Die Dicken der biaxial gereckten Folien auf Basis von Polypropylen liegen besonders zwischen 15 und 100 µm, vorzugsweise zwischen 20 und 50 µm.

Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Besonders bevorzugt für die erfindungsgemäßen Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Die Haftung des Haftvermittlers auf der Thermoplastfolie auf Basis von Polyolefinen kann durch Coronabehandlung oder Flammenvorbehandlung verbessert werden, denn gerade die Oberflächen der Folien auf Basis von gereckten Polyolefinen können durch diese allgemein bekannten Verfahren, wie die Corona- oder Flammenbehandlung, behandelt werden. Bevorzugt sind Oberflächenbehandlungen durch Coronabehandlung.
Eine Übersicht über die Verfahren zur Oberflächenbehandlung enthält beispielsweise der Artikel "Surface pretreatment of plastics for adhesive bonding" /A. Kruse; G. Krüger, A. Baalmann and O. D. Hennemann; J. Adhesion Sci. Technol., Vol 9, No12, pp 1611-1621 (1995).
Die biaxial gereckten Folien für die erfindungsgemäßen Klebebänder werden auf der der Masse beziehungsweise dem gegebenenfalls vorhandenen Haftvermittler zugewandten Seite corona- oder flammenvorbehandelt, allerdings nicht oberflächenbehandelt und/oder corona- oder flammenvorbehandelt auf der der Masse abgewandten Seite.

In einer weiteren bevorzugten Ausführungsform der Erfindung ist zwischen der gegebenenfalls flammen- oder coronabehandelten Folie und der Klebeschicht ein Haftvermittler vorhanden, der den guten Verbund der Klebemasse mit der Folie und die Vemetzung der Klebemasse garantiert.
Der optional eingesetzte Haftvermittler zwischen Klebemasse und Trägerfolie optimiert den Verbund zwischen den genannten Schichten.

Der Schichtauftrag der Klebeschicht beträgt insbesondere 10 bis 45 g/qm. In einer bevorzugten Ausführung wird der Schichtauftrag von 13 bis 28 g/qm eingestellt.

In einer besonders bevorzugten Variante enthalten die Klebemassen der erfindungsgemäßen Klebebänder 45 bis 60 Gew.-% Naturkautschuklatex. Weiterhin erfindungsgemäß sind andere Naturkautschuklatices sowie Mischungen verschiedener Typen von Naturkautschuklatices.

Je nach Anwendung können der Klebemasse zugesetzt werden, und zwar unabhängig voneinander gewählt:

| | | |
|---|---|---|
| a) | 0,1 bis 5 Gew.-% | eines Alterungsschutzmittels, |
| b) | 0,05 bis 5 Gew.-% | eines Entschäumers, |
| c) | 0,05 bis 5 Gew.-% insbesondere 1,0 bis 3 Gew.-% | eines alkoxylierten Alkylphenols |
| d) | 0,05 bis 20 Gew.-% | mindestens eines Farbpigments |

Weiter vorzugsweise enthält die Klebeschicht bis zu 20 Gew.-% mindestens einer Harzdispersion auf Basis von Kohlenwasserstoffharzen mit einem Erweichungspunkt von 20 °C bis 85 °C.
Die Klebemasse kann insbesondere 0,05 bis 20 Gew.-% und bevorzugt 2 bis 15 Gew.-% der zusätzlichen Harzdispersion enthalten.

Als Rohstoff für die erfindungsgemäßen Klebebänder wird bevorzugt Standard Naturkautschuklatex mit einem Ammoniakgehalt von 0,7 Gew.-% verwendet, zum einen da der erwähnte Naturkautschuklatex preisliche Vorteile bietet und zum zweiten da sein relativ hoher Ammoniakgehalt eine gute Stabilisierung des Naturkautschuklatex ermöglicht. Im wesentlichen eignet sich Naturkautschuklatex sehr gut für die Verwendung von Klebemassen für Klebebänder. Durch das sehr hohe Molekulargewicht, die Verschlaufungen der Molekülketten, niedriger Glasübergangstemperatur und der fehlenden Mastikation, bei der Herstellung der Klebemassen, des Naturkautschuklatex zeigen Klebemassen auf Basis von Naturkautschuklatex eine hervorragende Ausgewogenheit zwischen Adhäsion und Kohäsion.
Diese Eigenschaften sorgen für eine sehr hohe Verpackungssicherheit bei der Verwendung von Klebebändern mit einer Klebemasse auf Basis von Naturkautschuklatex, besonders bei Verwendung von kritischen Kartontypen und niedrigen Temperaturen.

Kritisch kann die mechanische Stabilität des Naturkautschuklatex in Bezug auf mechanische Scherbelastungen sein. Hierbei führen starke mechanische Scherbelastungen zur Koagulation des Naturkautschuklatex und somit zur fehlenden Verarbeitbarkeit. Möglichkeiten die Klebemassen auf Basis von Naturkautschuklatex gegenüber mechanischen Belastungen zu stabilisieren, sind zum einen der Einsatz von stabilisierenden, geeigneten Harzdispersionen und zum anderen der Einsatz von Emulgatoren.

Die erfindungsgemäßen Klebebänder enthalten vorzugsweise Naturkautschuklatex zwischen 35 bis 70 Gew.-% des Standard Naturkautschuklatex mit einem hohem Ammoniakgehalt.

Wäßrige Harzdispersionen, d.h. Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp.545-566.
Harzdispersionen von Kohlenwasserstoffharzen sind ebenfalls bekannt und werden beispielsweise von der Firma Hercules BV unter dem Handelsnamen Tacolyn angeboten.

Für die erfindungsgemäßen Klebebänder werden Harzdispersionen auf Basis von Kohlenwasserstoffharzen oder modifizierten Kohlenwasserstoffharzen als Hauptharzkomponente verwendet. Die Klebemasse enthält zwischen 20 bis 65 Gew.-% der Harzdispersion. Der Feststoffgehalt der Harzdispersion liegt insbesondere zwischen 40 und 70 Gew.-%, bevorzugt zwischen 45 und 60 Gew.-%.

Der Einsatz von Kolophoniumharzdispersionen beziehungsweise von Derivaten von Kolophoniumharzdispersionen wird zur Optimierung der Adhäsionseigenschaften für Klebemassen im Klebebandbereich eingesetzt. Durch geeignete Wahl des Erweichungspunktes in Kombination mit einem optimierten Harz-Naturkautschuk Verhältnis läßt sich das Abrollverhalten der erfindungsgemäßen Klebebänder positiv beeinflussen. Somit werden durch den Einsatz geeigneter Kolophoniumharzdispersionen die Übergangsgeschwindigkeiten (leises Abrollen - lautes Abrollen) der erfindungsgemäßen Klebebänder deutlich zu höheren Abrollgeschwindigkeiten hin verschoben.

Für die erfindungsgemäßen Klebebänder werden Harzdispersionen auf Basis von Kolophoniumharzen oder modifizierten Kolophoniumharzen als Nebenharzkomponente verwendet. Die Klebemasse enthält zwischen 0,5 bis 20 Gew.-% der Harzdispersion und bevorzugt zwischen 1,5 bis 15 Gew.-% der Harzdispersion. Der Feststoffgehalt der Harzdispersion liegt insbesondere zwischen 40 und 70 Gew.-%, bevorzugt zwischen 45 und 60 Gew.-%. Der Erweichungspunkt des Kolophoniumharzes beziehungsweise des modifizierten Kolophoniumharzes liegt zwischen 5 °C und 60 °C, bevorzugt zwischen 12 °C und 50 °C.

Erfindungsgemäß ist auch die Verwendung von Harzdispersion auf Basis von Mischungen verschiedener Kohlenwasserstoffharze und Kolophoniumharze beziehungsweise von modifizierten von Kolophoniumharzen sowie von Mischungen von erfindungsgemäßen Kohlenwasserstoffharzen und Kolophoniumharzen mit anderen Harzen.

Erfindungsgemäß ist auch die Verwendung von Harzdispersion auf Basis von Mischungen verschiedener Kohlenwasserstoffharze sowie von Mischungen von erfindungsgemäßen Kohlenwasserstoffharzen mit anderen Harzen.

Ebenfalls bekannt sind Harzdispersionen auf Basis von modifizierten Kohlenwasserstoffen, und von besonderem Interesse sind hierbei C5/C9 Kohlenwasserstoff-Harzdispersionen, welche mit Aromaten modifiziert sind. Hierbei kann durch den Anteil des Aromatengehaltes die Polarität der Harzdispersion und damit der Klebemasse eingestellt werden. Neben der Polarität der Klebemasse wird die Härte des Harzes beeinflußt. Je geringer der Aromatengehalt ist, desto niedriger ist hierbei die Polarität der modifizierten Kohlenwasserstoffharzdispersion.

Alterungsschutzmittel für Klebemassen auf Basis von Naturkautschuk sind bekannt. Drei verschiedene Arten von Alterungsschutzmittel finden als Antioxidantien für Klebemassen besonders Verwendung. Alterungsschutzmittel auf Basis von Aminen, Dithiocarbamaten und auf Basis von Phenolen. Alterungsschutzmittel auf Basis von Phenolen sind sehr wirksam bei Einfluß von UV Strahlung und Sonnenlicht.

Für die erfindungsgemäßen Klebebänder werden Alterungsschutzmittel auf Basis von Phenolen eingesetzt. Die Klebemasse enthält insbesondere 0,1 bis 5 Gew.-% eines Alterungsschutzmittels auf Basis von Phenolen. Erfindungsgemäß ist auch die Verwendung anderer Typen von Alterungsschutzmitteln, wie beispielsweise Alterungsschutzmittel auf Basis von Aminen und Dithiocarbamaten.

Anorganische und organische Pigmente für Klebmassen auf Basis von Naturkautschuk sind bekannt. Für die Anfärbung von Klebemassen auf Basis von Naturkautschuk wird insbesondere Titandioxid beziehungsweise Titandioxid in Kombination mit anders gefärbten Farbpigmenten eingesetzt.
Für die erfindungsgemäßen Klebebänder werden geeignete anorganische und/oder organische Farbpigmente in Dispersionsform eingesetzt. Die Klebemasse enthält vorzugsweise 0,05 bis 20 Gew.-% eines organischen beziehungsweise anorganischen Farbpigments. Weiterhin erfindungsgemäß ist die Verwendung von Pigmenten auf Basis von Mischungen verschiedener anorganischer und organischer Pigmente.

Die Verwendung von alkoxylierten Alkylphenolen als Weichmacher wird unter anderem vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p.471. Die Eigenschaften der alkoxylierten Alkylphenole werden durch den Alkylrest und überwiegend durch den Aufbau der Polyglykoletherkette bestimmt. In einer bevorzugten Ausführung wird propoxyliertes Alkylphenol verwendet. Bevorzugt sind wasserlösliche alkoxylierte Alkylphenole.

Die Verwendung von Alkylphenolpolyglycolethern als Emulgatoren zur Stabilisierung der Naturkautschuklatex Dispersionsklebemasse wird unter anderem vorgeschlagen in "Compounding Natural Latex in water-based PSA's", Richard C. Oldack und Robert. E. Bloss in Adhesive Age, April 1979, pp 38-43.
Die Eigenschaften und die stabilisierende Wirkung der alkoxylierten Alkylphenole oder allgemein der Polyethylenoxyethanolat-Kondensate werden überwiegend durch die Polyglykoletherkette bestimmt. Hierbei ist ein Zusammenhang zwischen Länge der Polyglykoletherkette und der stabilisierenden Wirkung für Naturkautschuklatex gefunden worden.

Die erfindungsgemäßen Klebemassen können 0,05 bis 5 Gew.-% alkoxyliertes Alkylphenol, in einer bevorzugten Ausführung 1 bis 3 Gew.-%, enthalten.

Die Herstellung der erfindungsgemäßen Klebebänder kann nach den bekannten Verfahren erfolgen. Eine Übersicht über übliche Herstellungsverfahren findet sich beispielsweise in "Coating Equipment", Donatas Satas in Handbook of Pressure Sensitive Adhesive Technology, Second Edition edited by Donatas Satas, Van Nostrand New York, pp. 708-808. Die bekannten Verfahren zum Trocknen und Schneiden der Klebebänder sind ebenfalls im Handbook zu finden.
Die erfindungsgemäßen Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping-Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäßen Klebbänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.
Die Verpackungsklebebänder weisen insbesondere Lauflängen auf von 66, 100 und 1000 m. Als Breite der Rollen werden üblicherweise 18, 24, 36, 48, 50 und 72 mm gewählt.
Die bevorzugten Farben sind braun, weiß und transparent. Die Bedruckung erfolgt auf Rollen von 144 oder 150 mm Breite, die anschließend wieder auf die oben genannten Breiten geschnitten werden.

Im folgenden soll die Erfindung anhand von Beispielen erläutert werden, ohne die Erfindung unnötig einschränken zu wollen.

### Beispiele

### Beispiel a: Folie

Es wird eine biaxial gereckte Folie auf Basis von Polypropylen der Fa. Radici verwendet.

| | |
|---|---|
| Foliendicke | 28 µm |
| Kennzeichnung | Radil T |
| Firma/Hersteller | Radici SpA |
| Reißdehnung längs | 130% |
| Reißdehnung quer | 50% |
| Elastizitätsmodul längs | 2500 N/qmm |
| Elastizitätsmodul quer | 4000 N/qmm |

Die Oberflächenenergie der unbehandelten BOPP-Folie Radil T25 beträgt weniger als 30 mN/m. Die Oberflächenenergie der Polypropylenoberfläche, die mit Haftvermittler beschichtet wird, beträgt 44 bis 46 mN/m nach Coronabehandlung.
Die Oberflächenenergie der unbehandelten Polypropylenoberfläche der Folie Radil T25 beträgt weniger als 30 mN/m. Dies ist die der Klebemasse gegenüberliegenden Folienseite.

### Beispiel b: Komponenten

### Eingesetzte Komponenten:

- b1: der Klebemasse
- b1.1: Naturkautschuklatex beziehbar über die Fa. Weber&Schaer, Hamburg; (Feststoffgehalt 60 %)
- b1.2.1.: Wäßrige Harzdispersion auf Basis von Kohlenwasserstoffharzen (Fa. Hercules BV, MBG193, Feststoffgehalt 55 Gew.-%; Erweichungspunkt 70 °C)
- b1.2.2.: Wäßrige Harzdispersion auf Basis eines Esters eines Kolophoniumharzes (Fa. Eka Chemicals, Worle England; Snowtack 321A; Feststoffgehalt 50 Gew.-%; Erweichungspunkt 32 °C)

- b.1.3.: Alterungsschutzmittel AD112 der Fa. Synthomer GmbH, Frankfurt
- b1.4: Entschäumer Foamaster 306 der Fa. Henkel, Düsseldorf

- b2: des Primers
- b2.1: Butofan LS103 (Dispersion aus Basis von Styrol-Butadien Kautschuk; BASF)

### Beispiel c: Rezepturen

- c1: Rezeptur A der Klebemasse

Die Rezeptur ist in Gew.-% angegeben:

| | |
|---|---|
| Naturkautschuklatex Dispersion | 51 Gew.-% |
| MBG 193 | 43 Gew.-% |
| Snowtack SE 325A | 5 Gew.-% |
| Alterungsschutzmittel | 0,7 Gew.-% |
| Entschäumer | 0,3 Gew.-% |

- c2: Rezeptur B des Primers

Die Rezeptur ist in Gew.-% angegeben:

| | |
|---|---|
| Butofan LS103 | 100 Gew.-% |

### Beispiel d: Herstellung der Klebemasse und des Primers

Die Herstellung der zu beschichtenden Klebemassen A wird wie folgt durchgeführt:
- d1: In den Naturkautschuklatex werden bei 23 °C die beiden Harzdispersionen unter ständigem Rühren mit einem üblichen mechanischen Rührer zugegeben. Danach wird 15 min weiter vorsichtig gerührt.
- d2: In die Mischung von Schritt 1 (d1) wird vorsichtig das Alterungsschutzmittel und der Entschäumer eingerührt. Danach wir 15 min weitergerührt. Danach erfolgt die Beschichtung.

Die Herstellung des Primers mit Rezeptur B wird wie folgt durchgeführt:
- d3: Butofan LS103 wird ohne weitere Vorbehandlung eingesetzt.

### Beispiel e: Beschichtung

Die Beschichtung der Folie a mit der Primer Rezeptur B und der Klebemasse Rezeptur A erfolgt durch einen Drahtrakel. Hierbei wird in einem ersten Schritt der Primer aufgetragen, kurz getrocknet bei 80 bis 90 °C und direkt danach in einem zweiten Schritt (in-line oder off-line) die Klebemasse auf die Primerschicht aufgetragen.

Das Drahtrakel und die Beschichtungsgeschwindigkeit werden so eingestellt, daß nach der Trocknung der beschichteten Folie ein Masseauftrag von ca. 18 g/qm gemessen wird und ein Primerauftrag von 0,6 bis 0,8 g/qm gemessen wird. Die Beschichtung erfolgt auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wird in einer Breite von 50 mm und 60 m Länge konfektioniert. Die Bestimmung der klebetechnischen Daten erfolgt nach zweitägiger Lagerung bei 23 °C und nach ein- bis dreimonatiger Lagerung bei 23 °C.

### Beispiel f: Ergebnisse

Die eingesetzten Prüfmethoden sind im folgenden kurz charakterisiert:

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Benzin entfernt und die nun klebemassefreie Folie erneut gewogen. Aus der Differenz wird der Masseauftrag in g/m² berechnet.

Zur Charakterisierung des Anfaßvermögens zu Karton wird das Klebeband mit einem handelsüblichen Handabroller auf den Karton aufgebracht und mittels einer 2 kg schweren Stahlrolle angedrückt (zweimaliges Überrollen). Nach einer Wartezeit von 3 min wird das Klebeband mit einer Geschwindigkeit von ca. 30m/min unter einem Winkel von ca. 130° zur Kartonoberfäche parallel abgezogen. Die Beurteilung des Anfaßvermögens zu Karton erfolgt qualitativ anhand der Menge an ausgerissenen Papierfasem im Vergleich zu einem handelsüblichen Verpackungsklebeband wie tesapack 4124 der Fa. Beiersdorf, dessen Anfaßvermögen sehr gut charakterisiert wird.

Zur Bestimmung der Verpackungssicherheit wird ein Standardkarton (Versandkarton; 425 mm x 325 mm x 165 mm: Länge x Breite x Höhe: Fa. Europakarton; aufgebaut aus zweiwelliger Wellpappe mit 125 g/qm Außenlage aus Kraftliner) mit dem Klebeband mittels eines handelsüblichen Verpackungsautomaten (Fa. Knecht, Modell 6030 und Verschlußaggregat 6230, Einstellung ohne Bremsweg) verschlossen. Das Klebeband wird mittig im üblichen U-Verschluß aufgebracht, so daß an den Stirnseiten jeweils 60 mm Klebeband verklebt sind. Der Karton wird vor dem Verschließen vollständig mit Erbsen gefüllt und auf der Seitenfläche liegend bei 40 °C und bei 23 °C gelagert. Die Verpackungssicherheit wird sehr gut charakterisiert, wenn der Karton länger als 30 Tage verschlossen bleibt. Weiterhin wird das Rutschen des Klebebandes am Karton beziehungsweise das Verhalten des Klebebandes an den verklebten Stellen charakterisiert und beschrieben und mit dem Referenzklebeband verglichen (Tabelle 1 ).

Die Bestimmung des Abrollgeräusches erfolgt beim Abrollen des Klebebandes mit einer Abrollgeschwindigkeit von 60 m/min. Gemessen wird das Abrollgeräusch in dB (A) im Abstand von 25 cm vom Zentrum der Klebebandrolle mit einem handelsüblichen Lautstärkemeßgerät der Firma Brüel&Kjear (Type 2226). Eine gemessene Lautstärke kleiner als 83 dB (A) wird als leise eingestuft.

Die Messung der Abrollkraft erfolgt bei konstanter Abrollgeschwindigkeit (30 m/min) durch Messung des Drehmoments und Berechnung der Abrollkraft nach den bekannten Formeln in N/cm.

Die Ergebnisse der Untersuchung eines erfindungsgemäßen Klebebands mit ungeprägter Folie und die Einschätzung zu Vergleichsklebebändem ist in Tabelle 1 wiedergegeben.

**Tabelle 1:**

| Verhalten der erfindungsgemäßen Klebebänder | | | |
|---|---|---|---|
| Aufbau/ Lagerzeit/ Temperatur | Muster A | Muster B | Muster C |
| | | tesa 4024 mit Rückseitencorona | tesa 4024 ohne Rückseitenbehandlung |
| Klebemasse | Klebemasse A | Acrylatdispersion | Acrylatdispersion |
| Träger | Folie a | Folie a | Folie a |
| Primer | Rezeptur B | Kein Primer | Kein Primer |
| Klebemasseauftrag [g/m²] | 18-22 | 24 | 24 |
| Auftrag Primerschicht [g/m²] | 0,8 | - | - |
| Oberflächenspannung Rückseite | ~ 30 mN/m | ∼ 36-38 mN/m | ∼ 30mN/m |
| Masseverankerung | Gut | Gut | Gut |
| Abrollverhalten [laut/leise] | leise | leise | laut |
| Abrollkraft bei 30 m/min [N/cm] | 3,8 | 4,5 | 1,5 |
| Verpackungssicherheit | Sehr gut | Gut | Gut |
| Anfaßverhalten zu Karton | Gut | Sehr gut | Sehr gut |
| Muster A: Muster der erfindungsgemäßen Klebebänder ohne Rückseitencorona | | | |

## Patentansprüche

1. Einseitig selbstklebend ausgerüstetes Klebeband, mit
a. einer Folie auf Basis gereckter Polyolefine, wobei die der Klebeschicht abgewandte Folienseite keine Oberflächenbehandlung aufweist,
b. einer einseitig auf die Folie aufgetragenen Klebeschicht, hergestellt aus einer Mischung enthaltend
| | |
|---|---|
| 35 bis 70 Gew.-% | ein Naturkautschuklatex |
| 20 bis 65 Gew.-% | einer Harzdispersion auf Basis eines Kohlenwasserstoffharzes, |
| 0,5 bis 20 Gew.-% | einer Harzdispersion auf Basis eines Kolophoniumharzes beziehungsweise eines Derivats eines Kolophoniumharzes. |

2. Klebeband nach Anspruch 1, **dadurch gekennzeichnet, daß** die Folie aus biaxial gereckten Folien auf Basis von Polypropylen besteht und eine Foliendicke zwischen 20 und 50 µm aufweist.

3. Klebeband nach Anspruch 1, **dadurch gekennzeichnet, daß** die Folie aus monoaxial gereckten Folien auf Basis von Polypropylen besteht und eine Foliendicke zwischen 25 und 200 µm, insbesondere zwischen 40 und 130 µm, aufweist.

4. Klebeband nach zumindest einem der vorhergehenden Ansprüche, **dadurch gekennzeichnet, daß** zwischen der Folie und der Klebeschicht eine Schicht aus einem Primer aufgebracht ist.

5. Klebeband nach zumindest einem der vorhergehenden Ansprüche, **dadurch gekennzeichnet, daß** der Schichtauftrag der Klebeschicht auf die Folie 10 bis 45 g/qm beträgt.

6. Klebeband nach zumindest einem der vorhergehenden Ansprüche, **dadurch gekennzeichnet, daß** die Klebeschicht bis zu 20 Gew.-% mindestens eine Harzdispersion auf Basis von Kohlenwasserstoffharzen mit einem Erweichungspunkt von 20 °C bis 85 °C enthält.

7. Klebeband nach zumindest einem der vorhergehenden Ansprüche, **dadurch gekennzeichnet, daß** die Klebeschicht enthält zu
| | |
|---|---|
| 0,1 bis 5 Gew.-% | ein Alterungsschutzmittel, |
| 0,05 bis 5 Gew.-%, insbesondere 1,0 bis 3 Gew.-%, | ein alkoxyliertes Alkylphenol, |
| 0,05 bis 5 Gew.-% | ein Entschäumer und/oder |
| 0,05 bis 20 Gew.-% | zumindest ein Farbpigment. |

8. Verwendung des Klebebandes nach einem der Ansprüche 1 bis 7 als Verpackungsklebeband, mit gutem Anfaßvermögen zu Papier, insbesondere recyceltem Papier, ausreichender Kohäsion, guter Verpackungssicherheit, guter Masseverankerung und leichtem Abrollen.

## Claims

1. Unilaterally self-adhesively coated adhesive tape, comprising
a. a film based on oriented polyolefins, in which that side of the film remote from the adhesive layer exhibits no surface treatment,
b. an adhesive layer applied to one side of the film, prepared from a mixture comprising
| | |
|---|---|
| from 35 to 70% by weight | of a natural rubber latex, |
| from 20 to 65% by weight | of a resin dispersion based on a hydrocarbon resin, and |
| from 0.5 to 20% by weight | of a resin dispersion based on a rosin or on a derivative of a rosin. |

2. Tape according to Claim 1, **characterized in that** the film is composed of biaxially oriented polypropylene and has a thickness of between 20 and 50 µm.

3. Tape according to Claim 1, **characterized in that** the film is composed of monoaxially oriented polypropylene and has a thickness of between 25 and 200 µm, in particular between 40 and 130 µm.

4. Tape according to at least one of the preceding claims, **characterized in that** a layer of a primer has been applied between the film and the adhesive layer.

5. Tape according to at least one of the preceding claims, **characterized in that** the application rate of the adhesive layer to the film is from 10 to 45 g/m².

6. Tape according to at least one of the preceding claims, **characterized in that** the adhesive layer contains up to 20% by weight of at least one resin dispersion based on hydrocarbon resins having a softening point of from 20°C to 85°C.

7. Tape according to at least one of the preceding claims, **characterized in that** the adhesive layer contains
| | |
|---|---|
| from 0.1 to 5% by weight | of an ageing inhibitor, |
| from 0.05 to 5% by weight, in particular from 1.0 to 3% by weight, | of an alkoxylated alkylphenol, |
| from 0.05 to 5% by weight | of a defoamer and/or |
| from 0.05 to 20% by weight | of at least one colour pigment. |

8. Use of the tape according to any of Claims 1 to 7 as an adhesive packaging tape possessing good tack with respect to paper, especially recycled paper, adequate cohesion, good packaging security, good anchoring of the adhesive composition, and easy unwind.

## Revendications

1. Ruban adhésif traité d'un côté pour être autocollant, comportant
a. une pellicule à base de polyoléfines étirées, la face de la pellicule opposée à la couche adhésive ne présentant aucun traitement de surface,
b. une couche adhésive appliquée d'un côté sur la pellicule, préparée à partir d'un mélange contenant
| | |
|---|---|
| 35 à 70 % en poids | d'un latex de caoutchouc naturel, |
| 20 à 65 % en poids | d'une dispersion de résine à base d'une résine hydrocarbonée, |
| 0,5 à 20 % en poids | d'une dispersion de résine à base d'une résine de colophane ou d'un dérivé d'une résine de colophane. |

2. Ruban adhésif selon la revendication 1; **caractérisé en ce que** la pellicule consiste en pellicules à base de polypropylène étirées biaxialement et présente une épaisseur de pellicule comprise entre 20 et 50 µm.

3. Ruban adhésif selon la revendication 1, **caractérisé en ce que** la pellicule consiste en pellicules à base de polypropylène étirées biaxialement et présente une épaisseur de pellicule comprise entre 25 et 200 µm, en particulier entre 40 et 130 µm.

4. Ruban adhésif selon au moins l'une des revendications précédentes, **caractérisé en ce qu'**une couche d'un primaire est appliquée entre la pellicule et la couche adhésive.

5. Ruban adhésif selon au moins l'une des revendications précédentes, **caractérisé en ce que** l'application de la couche adhésive sur la pellicule va de 10 à 45 g/m².

6. Ruban adhésif selon au moins l'une des revendications précédentes, **caractérisé en ce que** la couche adhésive contient jusqu'à 20 % en poids d'au moins une dispersion de résine à base de résines hydrocarbonées ayant un point de ramollissement de 20°C à 85°C.

7. Ruban adhésif selon au moins l'une des revendications précédentes, **caractérisé en ce que** la couche adhésive contient, à raison de
| | |
|---|---|
| 0,1 à 5 % en poids | un agent anti-vieillissement, |
| 0,05 à 5 % en poids | |
| en particulier de | |
| 1,0 à 3 % en poids | un alkylphénol alcoxylé, |
| 0,05 à 5 % en poids | un antimousse, et/ou |
| 0,05 à 20 % en poids | au moins un pigment coloré. |

8. Utilisation du ruban adhésif selon l'une quelconque des revendications 1 à 7, en tant que ruban adhésif d'emballage ayant un bon pouvoir d'accrochage au papier, en particulier au papier recyclé, une cohésion suffisante, un bon maintien de la sûreté d'emballage, un bon accrochage de la matière et un déroulement peu bruyant.
